(19) Europäisches Patentamt / European Patent Office / Office européen des brevets

(11) EP 3 168 749 A1

(12) EUROPEAN PATENT APPLICATION
published in accordance with Art. 153(4) EPC

(43) Date of publication:
17.05.2017 Bulletin 2017/20

(51) Int Cl.:
G06F 13/00 (2006.01)     H04M 3/487 (2006.01)
H04M 11/00 (2006.01)

(21) Application number: 15819374.8

(22) Date of filing: 06.07.2015

(86) International application number:
PCT/JP2015/003381

(87) International publication number:
WO 2016/006221 (14.01.2016 Gazette 2016/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 08.07.2014 JP 2014140437

(71) Applicant: NEC Corporation
Tokyo 108-8001 (JP)

(72) Inventor: KAWATO, Masahiro
Tokyo 108-8001 (JP)

(74) Representative: Robson, Aidan John
Reddie & Grose LLP
16 Theobalds Road
London WC1X 8PL (GB)

(54) INFORMATION SHARING DEVICE, INFORMATION SHARING METHOD, INFORMATION SHARING SYSTEM, AND RECORDING MEDIUM HAVING COMPUTER PROGRAM STORED THEREIN

(57)     Provided are an information sharing device, etc., whereby a time cycle at which information is to be refreshed can be determined in accordance with the frequency that the information is browsed, and whereby said information can be provided without sacrificing real-time characteristics.

The information sharing device (1) comprises: a search unit (2) that, when request information (101) is received, browses position information (DB4) and provides the requested position information from among the position information (DB4), to a specified terminal; and a cycle determination unit (3) that, in accordance with the number of times that the position information (DB4) is browsed, determines a second time cycle and provides the determined second time cycle to the specified terminal and other terminals.

Fig. 2

**Description**

[Technical Field]

The present invention relates to a technical field of sharing information between terminals.

[Background Art]

Mobile terminals such as smartphones generally include location-measuring means such as GPS (Global Positioning System). In a mobile terminal (hereinafter simply referred to as "terminal" in the present application), a navigation system that displays the current location of the terminal itself having been measured using this location-measuring means, in a manner overlapped on a map is widely used. This location measurement by the GPS consumes a large amount of power stored in a battery in the terminal, and is not suitable for long continuous use. However, for example, application software (hereinafter simply referred to as "App" in the present application) for providing the navigation system in the terminal generally performs the location measurement only in a displayed state (foreground state) allowing an operation thereto. Therefore, there is no issue when using it.

On the other hand, location-measuring means by means of the GPS is also used for a location information sharing system aimed at knowing the mutual locations of a plurality of users when they are out. This location information sharing system allows the terminals used by a plurality of users to constitute a group. This location information sharing system distributes current location of each of the terminals participating in (belonging to) the same group constituted by the terminals, to each the terminal. Accordingly, a terminal can display the current location of each terminal belonging to the same group, in the state overlapped on the map.

Here, some of the representative prior related arts of the present application are Patent Literature 1 and Patent Literature 2.

Patent Document 1 discloses a technique related to a location information sharing system. This location information sharing system is constituted by a plurality of communication terminal devices corresponding to the above-mentioned mobile terminal and a management server device. In this system, one group is formed by a plurality of communication management devices. Each communication terminal device participating in the group transmits, to the management server device, information indicating the current location of that communication terminal device. The management server device transmits, to the other communication terminal devices participating in the same group, the location information received from the communication terminal device.

Patent Literature 2 discloses a service providing method, an information processing device, and a computer program. The information processing device receives location information received from a terminal. The information processing device determines the movement of the terminals on the basis of the received location information. When determining that the respective terminals held by users going out together are moving in the similar direction, the information processing device uses the location information of one of the terminals, as the location information of the other terminal. The information processing device also instructs the respective terminals to transmit the location information at different timings from each other. In this way, the information processing device can share the location information between the terminals held by the users going out together. Each of the terminals can notify the location information at different timings from each other. Therefore, Patent Literature 2 can effectively reduce the power consumption of the terminals.

[Citation List]

[Patent Literature]

[PTL 1] WO 2007/083628
[PTL 2] Japanese Patent Application Publication No. 2012-142794

[Summary of Invention]

[Technical Problem]

In the technique disclosed in Patent Literature 1, even when the App providing a service in a specific terminal is not displayed (i.e., background state), for example, it is still possible to refer to the current location of the specific terminal, from another terminal belonging to the same group. Therefore, the specific terminal needs to always measure the location of the specific terminal itself. The specific terminal must also transmit, to the management server device, the measured location information. Consequently, if the App is used over a long time, Patent Literature 1 has such a problem that the terminal rapidly consumes a battery power. In other words, the mobile terminal operated by the battery power, for example, cannot be used for a long time.

To counter this problem, Patent Literature 2 discloses a technique of sharing location information between the terminals held by the users going out together. Therefore, in Patent Literature 2, even when the users holding these terminals move in different directions from each other, for example, the location information might be shared. In other words, in Patent Literature 2, the location information is shared over a time till the movement of the terminals is determined again. As a result, Patent Literature 2 makes it difficult to accurately know the location of its own terminal. The information processing device disclosed in Patent Literature 2 instructs each terminal to transmit location information at different timings from each other, as described above. Therefore, for example when the specific terminal intends to obtain the current location, it is impossible for the current location to obtain it at a desired timing. In this way, for example, it is not impossible to acquire more accurate location information at the timing required by the App operating at the terminal, in Patent Literature 2.

A main object of the present invention is to provide an information sharing device and the like that can determine a time cycle for updating information depending on the frequency of referring to the information, and that can provide the information without sacrificing the real-time characteristic.

[Solution to Problem]

So as to solve the above-described issue, an information sharing device according to an aspect of the present invention includes the following configuration.

That is, an information sharing device according to an aspect of the present invention includes: search means for, in response to receiving, from a specific terminal, request information requesting location information of another terminal belonging to a same group as the specific terminal, referring to a location information database including the location information obtained at each first time cycle from the other terminal on the basis of a group ID (where the ID is an identifier) that can identify the group included in the request information, and providing the specific terminal with the location information of the other terminal obtained from the location information database, and cycle determining means for determining a second time cycle different from the first time cycle in accordance with a number of times the location information database is referred to, and providing the determined second time cycle to the specific terminal and the other terminal, wherein the cycle determining means determines the second time cycle to be a time cycle shorter than the first time cycle, as the number of times of referring becomes greater in a predetermined period.

Alternatively, the same object can also be achieved by an information sharing system including the above-described information sharing device.

So as to achieve the same object, an information sharing method according to an aspect of the present invention includes the following configuration.

That is, an information sharing method according to an aspect of the present invention includes: in response to receiving, from a specific terminal, request information requesting location information of another terminal belonging to a same group as the specific terminal, referring to a location information database including the location information obtained at each first time cycle from the other terminal on the basis of a group ID (where the ID is an identifier) that can identify the group included in the request information, and providing the specific terminal with the location information of the other terminal obtained from the location information database, and determining a second time cycle different from the first time cycle in accordance with a number of times the location information database is referred to, and providing the determined second time cycle to the specific terminal and the other terminal, wherein in determining the second time cycle, the second time cycle is determined to be a time cycle shorter than the first time cycle, as the number of times of referring becomes greater in a predetermined period.

The same object can also achieved by a computer program realizing an information sharing device having the above-described configurations and an information sharing method by means of a computer, and a computer readable recording medium having the computer program stored therein.

[Advantageous Effects of Invention]

The present invention can provide an information sharing device and the like that can determine the time cycle for updating information in accordance with the frequency of referring to the information, and that can provide the information without sacrificing the real-time characteristic.

[Brief Description of Drawings]

Fig. 1 is a block diagram illustrating a configuration of an information sharing system according to a first example embodiment of the present invention.

Fig. 2 is a block diagram illustrating a configuration of an information sharing device according to the first example embodiment of the present invention.

Fig. 3 is a diagram conceptually illustrating a configuration of a location information DB according to the first example embodiment according to the present invention.

Fig. 4 is a sequence diagram (flowchart) illustrating a process to update a transmission cycle performed by a cycle determining unit according to the first example embodiment of the present invention.

Fig. 5 is a flowchart illustrating a process to obtain a value of a transmission cycle performed by the cycle determining unit according to the first example embodiment of the present invention.

Fig. 6 is a diagram conceptually illustrating an aspect in which the access records in a reference period are plotted, according to the first example embodiment of the present invention.

Fig. 7 is a block diagram illustrating a configuration of an information sharing device according to a second example embodiment of the present invention.

Fig. 8 is a block diagram illustrating a configuration of an information sharing system including an information sharing device according to a third example embodiment of the present invention.

Fig. 9 is a sequence diagram (flowchart) illustrating a process when first location information is transmitted, which is performed by the information sharing system according to the third example embodiment of the present invention.

Fig. 10 is a sequence diagram (flowchart) illustrating a process of distributing location information, which is performed by the information sharing system according to the third example embodiment of the present invention.

Fig. 11 is a diagram concretely illustrating an aspect in which the display unit presents location information to a user, according to the third example embodiment of the present invention.

Fig. 12 is a block diagram illustrating a configuration of an information sharing device according to a fourth example embodiment of the present invention.

Fig. 13 is a block diagram illustrating a configuration of an information sharing device according to a fifth example embodiment of the present invention.

Fig. 14 is a block diagram that illustratively explains a hardware configuration of an information processing device that can realize each example embodiment according to the present invention.

[Description of Embodiments]

The example embodiment of the present invention will be described below in detail, with reference to the drawings.

<First example embodiment>

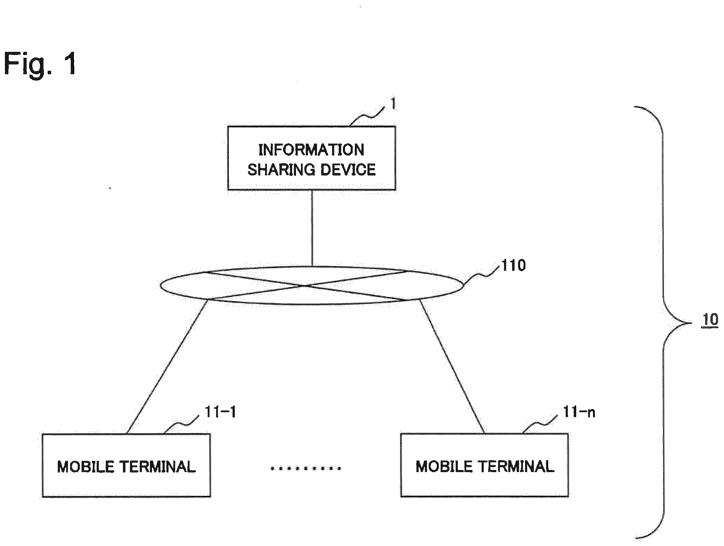

Fig. 1 is a block diagram illustrating a configuration of an information sharing system 10 according to a first example embodiment of the present invention.

In Fig. 1, the information sharing system 10 includes an information sharing device 1 and one or more mobile terminals (terminal device) 11-1 through 11-n. The information sharing device 1 and the mobile terminals 11-1 through 11-n are connected to be communicable via a wireless or wired communication network 110.

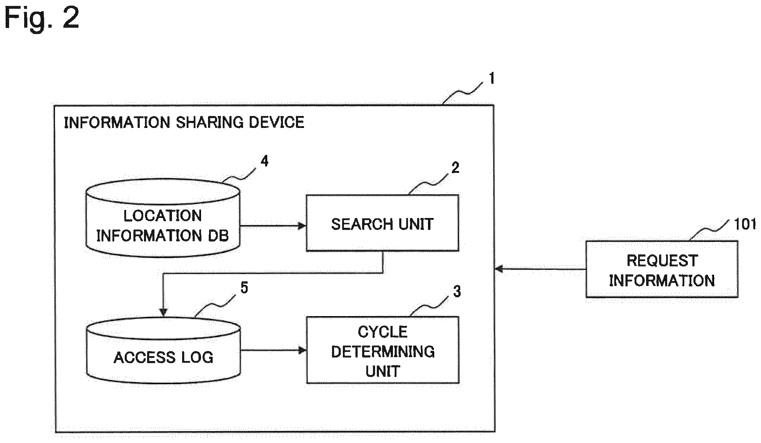

Fig. 2 is a block diagram illustrating a configuration of the information sharing device 1 according to the first example embodiment of the present invention.

In Fig. 2, the information sharing device 1 includes a search unit 2, a cycle determining unit 3, a location information database 4, and an access log 5.

In the following explanation, for the purpose of explanation, the mobile terminals 11-1 through 11-n are referred to as terminals 11-1 through 11-n. In the following explanation, the terminals 11-1 through 11-n are collectively referred to as "mobile terminal" or "terminal".

In the following explanation, for the purpose of explanation, one or more mobile terminals are assumed to form one group, as an example. The mobile terminals participating in (belonging to) the same group are assumed to share location information with each other.

For the purpose of explanation, the above-described configuration is taken as an example in the following. However, the present invention explained taking the present example embodiment as an example is not limited to the above-described configuration (the same applies to each example embodiment below).

The search unit 2 accepts (receives) request information 101 transmitted from a specific terminal. The search unit 2 returns (provides) information including information representing a location of the terminal (hereinafter referred to as "location information" in the present application) belonging to the same group accumulated in the location information database ("database" is hereinafter also referred to as "DB") 4, on the basis of the accepted request information 101.

To be more specific, the search unit 2 refers to the location information DB 4 on the basis of the accepted request information 101. That is, the search unit 2 refers to the location information DB 4, on the basis of a group ID being an identifier ("identifier" is hereinafter referred to as "ID") that can identify the group included in the request information 101. The search unit 2 searches for (refers to) a terminal ID that can identify the terminal, the location information, and the location-measured time associated with a group ID included in the request information 101, from the location information DB 4. That is, the search unit 2 obtains all the terminal IDs, location information, and location-measured times associated with the group ID from the location information DB 4, as a result of the search based on the group ID.

On the basis of the search result, the search unit 2 adds the searched content to the access log 5, as an access record. To be more specific, the search unit 2 stores, in the access log 5, the time (time stamp) at which the location information DB 4 was referred to on the basis of the request information 101 in association with the group ID included in the request information 101.

The search unit 2 transmits (provides) all the obtained terminal IDs, location information, and location-measured times, to the specific terminal being the transmission source of the request information 101.

The request information 101 includes information requesting location information of all the terminals belonging to the same group as the specific terminal, to the information sharing device 1. To be more specific, the request information 101 includes, as parameters, the group ID of the group to which the specific terminal (the terminal itself) being the transmission source belongs, and the terminal ID of the terminal itself. The request information 101 is transmitted to the information sharing device 1 at each predetermined time cycle only when an App that provides a service in the specific terminal is in the displayed state (foreground state), for example.

The present example embodiment assumes assignment of a unique terminal ID to each terminal. To be more specific, examples of the terminal ID are a telephone number assigned to the terminal, a MAC (Media Access Control) address, an IMEI (International Mobile Equipment Identity). Alternatively, a temporarily valid terminal ID generated by the information sharing device 1 in forming a group may be adopted as the terminal ID. In that case, the information sharing device 1 may deliver the generated terminal ID to the terminal.

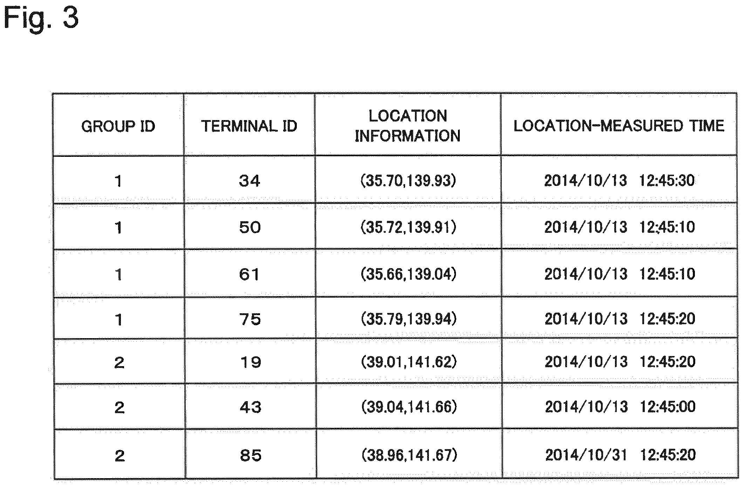

Next, the location information DB 4 includes location information transmitted from each terminal at each time cycle (transmission cycle, a first time cycle). The following explanation explains more specifically referring to Fig. 3. Fig. 3 is a diagram conceptually illustrating a configuration of a location information DB according to the first example embodiment of the present invention.

In the following explanation, for the purpose of explanation, the time cycle is referred to as "location information transmission cycle" or simply as "transmission cycle".

In Fig. 3, the location information DB 4 includes information associated with such attributes as "terminal ID" that can identify the terminal, with the "group ID" as a key, "location information", and "location-measured time" representing the time at which the location information was measured. Here, "location-measured time" is a time when the location at which the terminal itself is locationed is measured, by means of a measuring means such as GPS.

Each row shown in Fig. 3 is uniquely identified by a terminal ID (or a set of a group ID and a terminal ID). These attributes are assumed to be respectively included in first location information 102 transmitted from the terminal (the first location information 102 will be described later in the second example embodiment).

The access log 5 is constituted by an access record in which "time stamp" representing the date and time at which the search unit 2 executed the process of searching the location information DB 4 and the "group ID" of the group being the target of the search process are associated with each other. In other words, the access log 5 includes information in which "time stamp" and the "group ID" included in the request information 101 are associated with each other.

The format of an access record can be represented as "<time stamp>, <group ID>".

The cycle determining unit 3 refers to the content of the access log 5. The cycle determining unit 3 determines the transmission cycle (second time cycle) on the basis of the result of referring to the access log 5. The cycle determining unit 3 transmits a value representing the determined transmission cycle, as a cycle update notification, to all the terminals belonging to the same group. In the following explanation, for the purpose of explanation, the value representing the transmission cycle is also simply referred to as "value of a transmission cycle".

A transmission cycle is a time cycle at which the current location of a terminal is measured as described above and the first location information 102 including the measured location information is transmitted to the information sharing device 1. The location information is at least a latitude and a longitude representing the location at which the terminal is located by a numerical value.

(Update process of a transmission cycle)

In the following explanation, the operation of the information sharing device 1 according to the present example embodiment is described in greater detail.

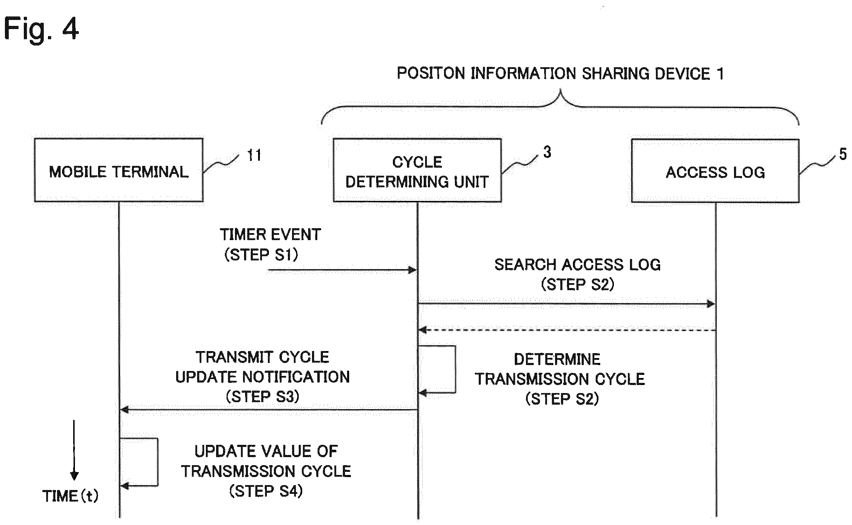

Fig. 4 is a sequence diagram (flowchart) illustrating a process to update a transmission cycle performed by the cycle determining unit 3 according to the first example embodiment of the present invention. The operational process of the cycle determining unit 3 is explained according to the sequence diagram. The dotted line illustrated in Fig. 4 represents a reply to a process. however, that the operation itself in a reply represented by a dotted line is not a character of the present example embodiment, and therefore the detailed explanation thereof is omitted (the same applies to each example embodiment below).

In the following explanation, for the purpose of explanation, the terminals 11-1 through 11-n are assumed to belong to a same group, as an example.

For the purpose of explanation, the above-explained configuration is taken as an example, however, the present invention explained taking the present example embodiment as an example is not limited to the above-explained configuration. (the same applies to each example embodiment below).

The cycle determining unit 3 starts a process to update the transmission cycle, upon occurrence of a timer event (Step S1).

The trigger for occurrence of the timer event is, for example, assumed to be each time cycle (e.g., a cycle of five minutes) set in advance by an administrator.

The cycle determining unit 3 refers to the access log 5. As a result, the cycle determining unit 3 obtains, from the access log 5, the access record stored within the most recent period. In other words, the cycle determining unit 3 obtains, from the access log 5, the access record stored from a time traced back in the past up to a most recent time (current time). Alternatively, the cycle determining unit 3 may obtain, from the access log 5, the access record stored during a period of a predetermined time after the former reference time.

To be more specific, in an example, the cycle determining unit 3 obtains the access record stored during the most recent five minutes. The cycle determining unit 3 determines the transmission cycle on the basis of the obtained access record (Step S2).

In the following explanation, for the purpose of explanation, the most recent period is referred to as "reference period" (the same applies to each example embodiment below).

The cycle determining unit 3 determines a shorter transmission cycle as the frequency, at which the location information of a terminal belonging to a group is referred to (requested) by a specific terminal, is higher. In other words, the cycle determining unit 3 determines the transmission cycle as described below, as the number of times the location information DB 4 is referred to in the reference period is higher. The cycle determining unit 3 determines the transmission cycle (second time cycle) to be a shorter time cycle than the already determined transmission cycle (first time cycle). The process of determining the transmission cycle by the cycle determining unit 3 is described in detail later in the present example embodiment.

The cycle determining unit 3 transmits the value of the determined transmission cycle to the terminals 11-1 through 11-n, as a cycle update notification (Step S3).

Accordingly, each of the terminals 11-1 through 11-n receives the cycle update notification from the information sharing device 1. The terminals 11-1 through 11-n update the value of the transmission cycle set to the terminal itself, on the basis of the cycle update notification (Step S4).

The terminals 11-1 through 11-n obtain the location information of the terminals themselves, at each of the updated transmission cycle (second time cycle). The terminals 11-1 through 11-n can transmit the obtained location information to the information sharing device 1. That is, the terminals 11-1 through 11-n can use the received value of a transmission cycle, as a cycle of timer event generation. As a result, the terminals 11-1 through 11-n can transmit the location information of the terminals themselves to the information sharing device 1, upon generation of the timer event.

The cycle of timer event generation explained in Step S1 is the same in length as the reference period explained in Step S2. However, they are not necessarily the same.

The cycle determining unit 3 may determine the value of a transmission cycle as in the following manner, for the purpose of reducing the communication processes required between the information sharing device 1 and each terminal for transmitting the cycle update notification to each terminal. That is, the cycle determining unit 3 may omit the transmission of the cycle update notification, if the determined value of the transmission cycle (second time cycle) is within a specific range from the currently set (already provided to the terminal) value of the transmission cycle (first time cycle). To be more specific, the specific range may adopt a configuration of setting ±10% of the value of the transmission cycle currently set, for example.

Next, the following explains the operation of obtaining the value of the transmission cycle by the cycle determining unit 3 according to the present example embodiment, in greater detail.

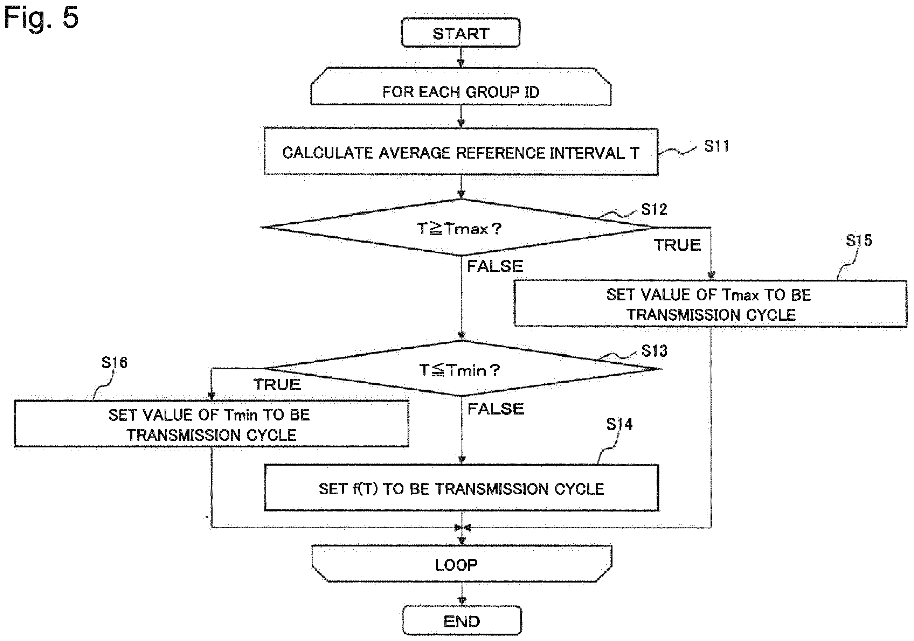

Fig. 5 is a flowchart illustrating a process to obtain the value of the transmission cycle performed by the cycle determining unit 3 according to the first example embodiment of the present invention. The operation procedure of the cycle determining unit 3 will be described according to this flowchart.

In the following explanation, "Tmin" representing the minimum value of a transmission cycle is determined in advance. "Tmax" representing the maximum value of a transmission cycle is determined in advance. To be more specific, in this example, Tmin is assumed to be five seconds, and Tmax is assumed to be ten minutes.

The cycle determining unit 3 repeatedly executes the loop processing constituted by the following Step S11 through Step S16, for each of the group IDs stored in the location information DB 4.

Step S11:

The cycle determining unit 3 searches for the access record having a time stamp that is within the range of the reference period from the access log 5 based on the group ID of interest and current time. The cycle determining unit 3 calculates an average reference interval T, on the basis of the search result. In other words, the average reference interval T can be calculated by $T=A/n$, where "n" is the number of records that satisfies the search condition, "A" is a reference period, and "/" indicates division (the same applies to each example embodiment below).

Step S12:

The cycle determining unit 3 compares the average reference interval T calculated in Step S11 with the maximum value "Tmax" set in advance.

"True" in Step S12:

If determining that the average reference interval T is equal to or greater than the maximum value "Tmax" ($T \geq Tmax$) as a result of comparison between the average reference interval T and the maximum value "Tmax", the cycle determining unit 3 proceeds to Step S15.

"False" in Step S12:

If determining that the average reference interval T is smaller than the maximum value "Tmax" as a result of comparison between the average reference interval T and the maximum value "Tmax", the cycle determining unit 3 proceeds to Step S 13.

Step S13:

The cycle determining unit 3 compares the average reference interval T with the minimum value "Tmin" set in advance.

"True" in Step S13:

If determining that the average reference interval T is equal to or smaller than the minimum value "Tmin" ($T \leq Tmin$) as a result of comparison between the average reference interval T and the minimum value "Tmin", the cycle determining unit 3 proceeds to Step S16.

"False" in Step S 13:

If determining that the average reference interval T is greater than the minimum value "Tmin" as a result of comparison between the average reference interval T and the minimum value "Tmin", the cycle determining unit 3 proceeds to Step S14.

Step S14:

The cycle determining unit 3 determines the value of the transmission cycle, using a function that increases the value in accordance with the obtained average reference interval T. That is, the cycle determining unit 3 sets the value of the transmission cycle to f(T), using a monotonically increasing function f(x), for example.

To be more specific, f(x) is assumed to be represented by $f(x)=2x$. That is, the value of the transmission cycle is twice the average reference interval T. In the following explanation, it is assumed to use the above-explained function f(x) in obtaining the value of the transmission cycle. However, if the obtained value of the transmission cycle is greater than the maximum value "Tmax", the cycle determining unit 3 is assumed to set the value of a transmission cycle to "Tmax".

Step S15:

The cycle determining unit 3 sets the value of the transmission cycle to "Tmax".

Step S16:

The cycle determining unit 3 sets the value of the transmission cycle to "Tmin".

The following explains a process to calculate the average reference interval T using a concrete example.

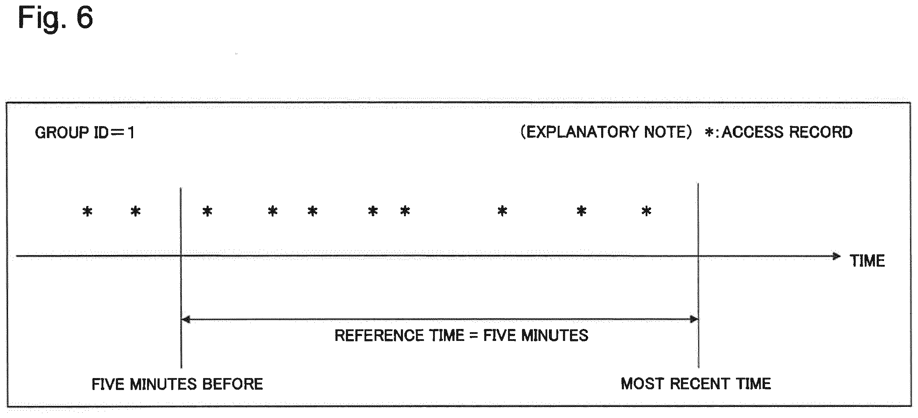

Fig. 6 is a diagram conceptually illustrating an aspect in which the access records in a reference period are plotted, according to the first example embodiment of the present invention.

In Fig. 6, the horizontal axis represents a time. "*" illustrated in Fig. 6 represents an access record to which a group ID (1) is designated within "five minutes" of the reference period.

In this example, eight access records exist in the most recent reference period. Therefore, the average reference interval T can be calculated as in the following expression (1). That is,

$$T = 5 \text{ minutes}/8 = 0.625 \text{ minute} \ldots (1)$$

Assuming $f(x) = 2x$ in the same example, the calculation result of the transmission cycle will result in the following expression (2). That is,

$$0.625*2 = 1.25 \text{ minutes} = 75 \text{ seconds} \ldots (2)$$

In the above-explained present example embodiment, for the purpose of explanation, a configuration of the search unit 2 searching the location information DB 4 using the group ID included in the request information 101 as a condition was explained. However, the example embodiment according to the present invention is not limited to this configuration. The search unit 2 may adopt a configuration of searching the location information DB 4 by using a filtering condition dependent on the application as an additional condition.

To be more specific, the following explains an example applied to such an App displaying, on a screen, the location of the other terminals within a certain distance from the specific terminal transmitting the request information 101. The search unit 2 may exclude the location information of the other terminals from the search result, if the following condition applies. Specifically, the condition is that there is a certain distance or greater between the current location of the specific terminal and the location indicated by the location information of the other terminals, in the location information obtained from the location information DB 4.

In the above-explained present example embodiment, for the purpose of explanation, an example is explained in which the search unit 2 takes such a configuration of storing the "time stamp" and "group ID" in the access log 5. However, the example embodiment according to the present invention is not limited to such a configuration. The search unit 2 may further adopt a configuration of storing the "terminal ID" of the terminal included in the search result in the access log 5. That is, the search unit 2 stores "time stamp", "group ID", and one or more "terminal IDs" included in the search result in association with each other, in the access log 5. When filtering as described above, the configuration of using the search result after the filtering, as the search result, may be adopted.

When storing the "terminal ID" in the access log 5, the format of the access record may be represented as "<time stamp>, <group ID>, <terminal ID>, <terminal ID>, ..."

Accordingly, the cycle determining unit 3 can determine the transmission cycle, also using "terminal ID" as a condition, not only using "time stamp" and "group ID" stored in the access log 5.

To be more specific, the cycle determining unit 3 repeats the process in Step S11 through Step S16 of Fig. 5 to the all the sets of the group IDs and the terminal IDs stored in the location information DB, instead of repeating the process to the group IDs stored in the location information DB 4. The cycle determining unit 3 searches for the access record having the time stamp that is within the range of the reference period from the access log 5 based on the group ID of interest and current time. The cycle determining unit 3 calculates the average reference interval T on the basis of the search result (Step S11).

In this way, when only the "time stamp" and "group ID" are recorded in the access log 5, the cycle determining unit 3 sets the same transmission cycle to all the terminal belonging to the same group. In contrast, when the "terminal ID" is further recorded in the access log 5, the cycle determining unit 3 can set different transmission cycles to the respective terminals belonging to the same group.

In this way, the information sharing device 1 according to the present example embodiment can determine the time cycle for updating the information in accordance with the frequency of referring to the information, and can provide the information without sacrificing the real-time characteristic. The following describes the reason.

That is, the information sharing device 1 includes the search unit 2, according to the request information 101, providing the location information of the terminal belonging to the same group, and the cycle determining unit 3 determining (increasing or decreasing) the transmission cycle in accordance with the frequency of referring to the location information DB 4 by the search unit. The cycle determining unit 3 can control to transmit the location information at each short transmission cycle to each terminal only when the location information is needed. On the other hand, when the location information is not needed, the cycle determining unit 3 can control to transmit the location information at each transmission cycle of the initial value to each terminal. Accordingly, the terminal can restrain the power consumption required for measuring the location of the terminal itself, and transmitting and receiving location information, for example. That is, the terminal can restrain the power consumption of the battery. The terminal can obtain more accurate location information when the location information is needed.

<Second example embodiment>

Next, the following describes the second example embodiment based on the above-described information sharing device 1 according to the first example embodiment of the present invention. The following explanation mainly explains the characteristic portion related to the present example embodiment. In the following, the same configuration as that of the above-described example embodiment will be assigned the same reference numeral and overlapping explanation is omitted.

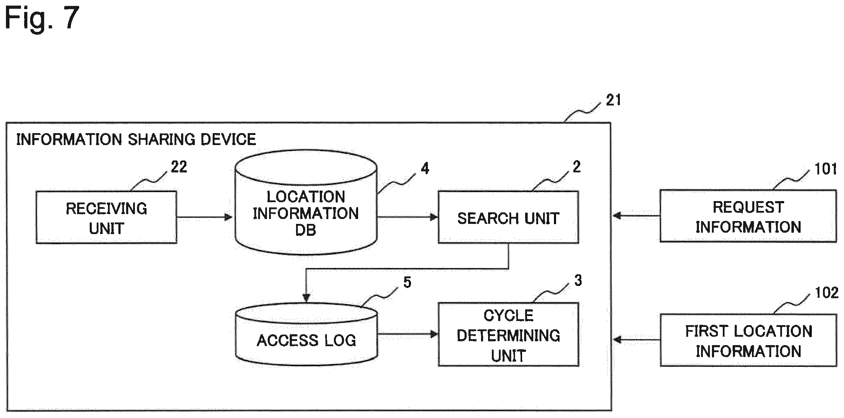

An information sharing device 21 according to the second example embodiment of the present invention is explained with reference to Fig. 7.

Fig. 7 is a block diagram illustrating a configuration of the information sharing device 21 according to the second example embodiment of the present invention.

In Fig. 7, the information sharing device 21 includes the search unit 2, the cycle determining unit 3, the location information database 4, the access log 5, and a receiving unit 22.

To be more specific, the receiving unit 22 accumulates the first location information 102 obtained from the terminal at each transmission cycle (first time cycle), in the location information DB 4. That is, the receiving unit 22 stores the first location information 102 received from the terminal, in the location information DB 4.

In storing the first location information 102 received from a terminal, in the location information DB 4, if the first location information 102 of that terminal is already stored in the location information DB 4, the receiving unit 22 executes the following process. That is, the receiving unit 22 overwrites (updates) the old first location information 102 having been stored, with the newly-received first location information 102.

The first location information 102 is information including location information transmitted to the information sharing device 21 from each terminal at each transmission cycle. To be more specific, the first location information 102 includes a terminal ID that can identify the terminal being the transmission source of the information, the group ID that can identify the group to which the terminal belongs, the location information of the terminal, and a location-measured time representing the time at which the location is measured.

In this way, the information sharing device 21 according to the present example embodiment can achieve the effect explained in the first example embodiment, and in addition, can manage the information related to the location information provided at each transmission cycle having been determined by the cycle determining unit 3.

The reason for the above is that the information sharing device 21 includes the receiving unit 22 that stores, in the location information DB 4, the first location information 102 provided at each transmission cycle.

<Third example embodiment>

Next, the following describes the third example embodiment based on the above-described information sharing device 21 according to the second example embodiment of the present invention. The following explanation mainly explains the characteristic portion related to the present example embodiment. In the following, the same configuration as that of each of the above-described example embodiments will be assigned the same reference numeral and overlapping explanation is omitted.

The information sharing device 21 according to the third example embodiment of the present invention is explained with reference to Fig. 3, and Fig. 8 to Fig. 11.

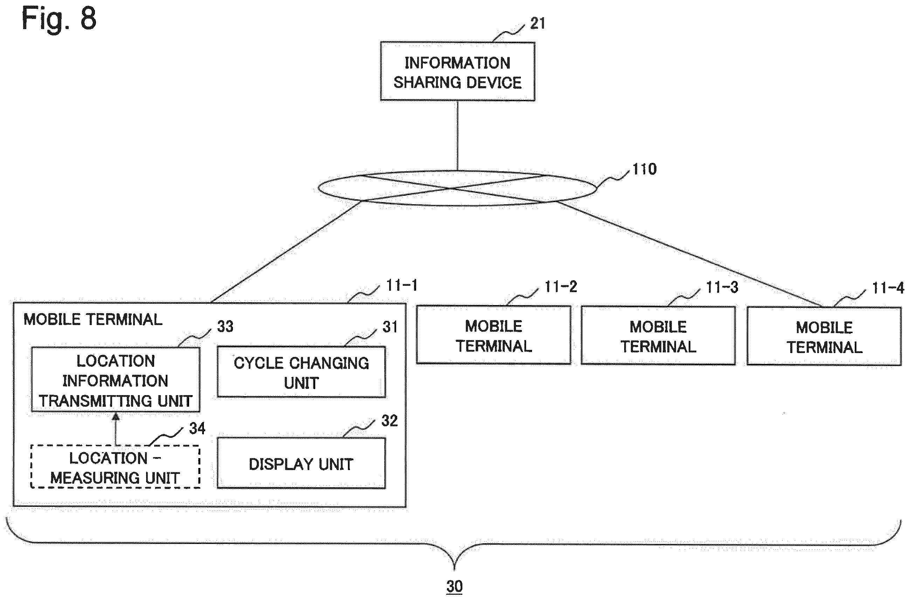

Fig. 8 is a block diagram illustrating a configuration of an information sharing system 30 including the information sharing device 21 according to the third example embodiment of the present invention.

In the following explanation, for the purpose of explanation, the information sharing system 30 is explained by way of an example configuration of including four mobile terminals 11-1 to 11-4, so as to make the explanation easier. However, the example embodiment according to the present invention is not limited to that configuration.

In Fig. 8, the information sharing system 30 roughly includes the information sharing device 21 and the mobile terminals 11-1 to 11-4. The configuration and the operation of the information sharing device 21 overlap with the configuration and the operation explained for each of the above-described example embodiments. Therefore, the detailed description thereof is omitted.

The terminals 11-1 to 11-4 includes a cycle changing unit 31, a display unit 32, and a location information transmitting unit 33. The configuration of the terminals 11-2 to 11-4 is the same as the configuration of the terminal 11-1. Therefore, they are not illustrated in the drawing for the purpose of explanation.

To be more specific, the cycle changing unit 31 receives a cycle update notification transmitted from the information sharing device 21. Then, the cycle changing unit 31 controls the location information transmitting unit 33 to reflect the value of the transmission cycle included in the received cycle update notification.

The display unit 32 requests, from the information sharing device 21, the location information of the terminal belonging to the same group. That is, the display unit 32 transmits the request information 101 to the information sharing device 21. The display unit 32 presents the result in response to the request, in a manner in which the user can easily recognize, for example.

The location-measuring unit 34 measures the current location of the terminal itself. To be more specific, an example of the location-measuring means includes the GPS, a Wi-Fi (registered trademark; Wireless-Fidelity) access point, and a mobile phone base station.

The location information transmitting unit 33 transmits, to the information sharing device 21, the first location information 102 including the location information measured by the location-measuring unit 34.

The following explains, in greater detail, the operation of the information sharing system 30 according to the present example embodiment.

For the purpose of explanation, the terminals 11-1 to 11-4 are assumed to belong to the same group (group ID: 1), for example. A method of forming a group is detailed later in the present example embodiment.

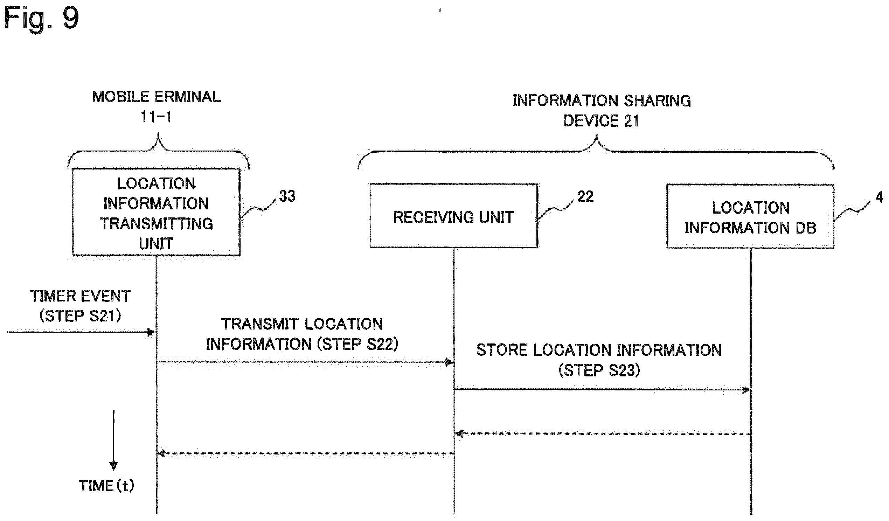

First, the following explains the process to transmit the first location information 102 to the information sharing device 21 from the terminal 11-1, with reference to Fig. 9.

Fig. 9 is a sequence diagram (flowchart) illustrating a process when the first location information 102 is transmitted, which is performed by the information sharing system 30 according to the third example embodiment of the present invention. The operation procedure of the information sharing system 30 is explained according to the sequence diagram.

(Location information transmission process)

The location information transmitting unit 33 explained below is assumed to transmit the first location information 102 to the information sharing device 21, at each transmission cycle, regardless of the displayed state (foreground state) or the non-displayed state (background state) of the App providing services, for example.

In the location information transmitting unit 33, a timer event is generated at each certain time cycle (transmission cycle) (Step S21).

In the present example embodiment, the transmission cycle is assumed to have been set to a predetermined value (e.g., 10 seconds) in the initial state. However, this value can be changed by a process to update the transmission cycle performed by the cycle determining unit 3.

The location information transmitting unit 33 uses the location-measuring unit 34 to measure the current location of the terminal itself. The location information transmitting unit 33 transmits, to the information sharing device 21, the first location information 102 including the measured result, the location information, the group ID, the terminal ID, and the measured time (Step S22).

The receiving unit 22 receives the first location information 102 from the location information transmitting unit 33. The receiving unit 22 stores the received first location information 102 in the location information DB 4 (Step S23).

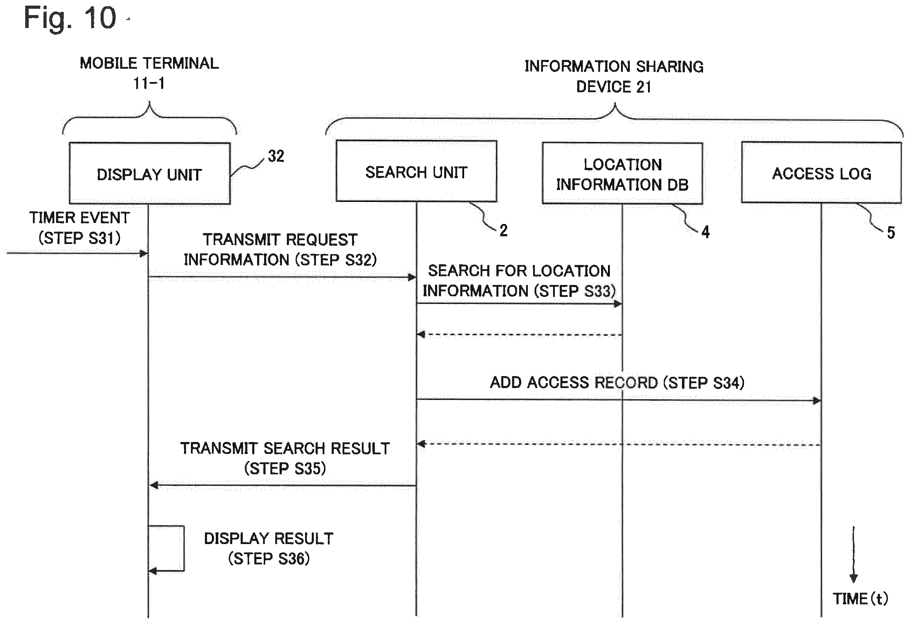

Next, the following explains a process to distribute, in response to the request from the terminal 11-1, the location information of the terminal belonging to the same group by the information sharing device 21, with reference to Fig. 10.

Fig. 10 is a sequence diagram (flowchart) illustrating a process of distributing location information, which is performed by the information sharing system 30 according to the third example embodiment of the present invention. The operation procedure of the information sharing system 30 is explained according to the sequence diagram.

(Location information distributing process)

The location information distributing process explained below operates independently from the location information transmitting process explained in Fig. 9. In addition, the location information distributing process is assumed to be performed only when the display unit 32 is in the displayed state (foreground state). For example, a user using a terminal is assumed to be able to switch the App between the displayed state and the non-displayed state.

The following explanation assumes that the terminal 11-1 requests, to the information sharing device 21, the location information representing the locations of all the terminals belonging to the same group.

In the display unit 32 of the terminal 11-1, a timer event is generated at each predetermined time cycle (e.g., 10 seconds) (Step S31).

The time cycle at which a timer event is generated may be variable. The value of the time cycle may be directly input by a user. The time cycle may be changed in accordance with the time elapsed since the last time a user touched the screen included in the terminal.

The display unit 32 transmits the request information 101 to the information sharing device 21 (Step S32).

The search unit 2 receives the request information 101. For all the terminals belonging to the designated group, the search unit 2 searches for the location information stored in the location information DB 4 (Step S33).

The search result is explained in greater detail with reference to Fig. 3. The following explanation assumes the "group ID=1 and the terminal ID=34" in line 2 of Fig 3, as the parameter of the request information 101.

The search unit 2 searches the location information DB 4 on the basis of the above-explained parameter. The search unit 2 obtains the following information as a search result, from the location information DB 4.

- group ID: "1", terminal ID: "50", location information: "35.72, 139.91 ", and location-measured time: "2014/10/13 12:45:10",
- group ID: "1 ", terminal ID: "61", location information: "35.66, 139.04", and location-measured time: "2014/10/13 12:45:10", and
- group ID: "1", terminal ID: "75", location information: "35.79, 139.94", and location-measured time: "2014/10/13 12:45:20".

The search unit 2 adds, to the access log 5, the search content as an access record, on the basis of the search result of Step S33 (Step S34). In addition, the search unit 2 transmits the search result to the terminal 11-1 (Step S35).

In this way, the terminal 11-1 can obtain the location information indicating the locations of the terminals 11-2 to 11-4, by requesting the location information of each terminal from the information sharing device 21.

The display unit 32 obtains, from the information sharing device 21, the location information of the other terminal different from the terminal itself. The display unit 32 uses the obtained location information, to update the display content of an interface such as a display, for example (Step S36).

The following describes a specific manner in which the result corresponding to the request information 101 is displayed in the terminal.

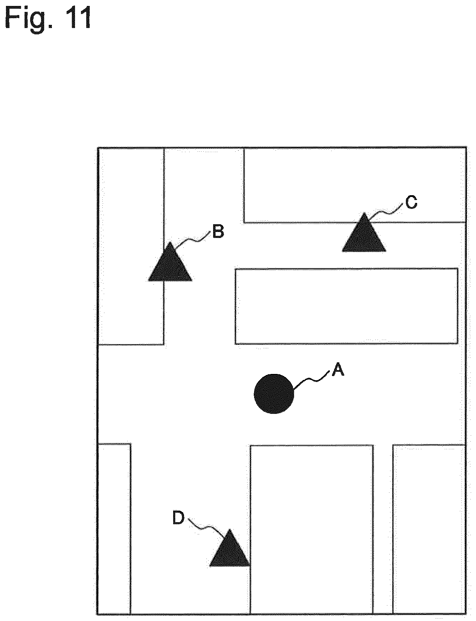

Fig. 11 is a diagram concretely illustrating an aspect in which the display unit 32 presents location information to a user, according to the third example embodiment of the present invention.

As an example, as illustrated in Fig. 11, the display unit 32 displays a map, having the current location of the terminal itself in the center. The display unit 32 may adopt a configuration to display in a manner in which the location of the terminal itself and the location of the other terminals are overlapped on the map. In Fig. 11, "A" indicated by the symbol ● in the center represents the location of the terminal itself. "B" "C" and "D" indicated by the symbol ▲ represent the locations of the other terminals that are different from the terminal itself A and that belong to the same group.

Alternatively, the display unit 32 may perform display by adjusting the scale (magnification) of the map so that the locations of the other terminals can be accommodated on the screen. Alternatively, the display unit 32 may display only the locational relationship between the terminal itself and the other terminals on the screen, without displaying the map. However, the present invention explained by way of the present example embodiment is not limited to the above-explained configuration (the same applies to each example embodiment below).

The following explains a process of forming a same group with the terminals 11-1 to 11-4, as an example.

(Group forming process)

For example, any one of the terminals 11-1 to 11-4 requests that the information sharing device 21 create a group. For example, the terminal 11-1 is assumed to request that the information sharing device 21 create a group.

The information sharing device 21 generates a new group ID, in response to the request from the terminal 11-1. The information sharing device 21 returns the generated group ID to the terminal 11-1.

The terminal 11-1 obtains the group ID from the information sharing device 21. The terminal 11-1 notifies the terminals 11-2 to 11-4 of the group ID, using such means as electronic mail.

The terminals 11-2 to 11-4 transmit a set of the received group ID and the terminal ID that can identify the terminal itself, to the information sharing device 21.

The information sharing device 21 registers the received group ID and the terminal ID in association with each other.

In this way, the information sharing system 30 including the information sharing device 21 according to the present example embodiment can achieve the effect explained in each example embodiment, and in addition, can efficiently share the location information of the terminal belonging to the group. In addition, according to the information sharing system 30, the battery consumption of the terminal can be restrained.

The reason is that, as the frequency of requesting the location information by the terminal gets higher, the information sharing device 21 controls the terminal to transmit the location information of the terminal itself at a shorter time cycle. however, as the frequency gets lower, the information sharing device 21 can control the terminal to transmit the location information at the time cycle indicating the initial value. This allows the terminal to obtain more accurate location information. The terminal can also restrain the power consumption required for the location measurement and transmitting the location information being the measurement result.

<Fourth example embodiment>

Next, the following describes an example embodiment based on the above-described information sharing device 21 according to the third example embodiment of the present invention. The following explanation mainly explains the characteristic portion related to the present example embodiment. In the following, the same configuration as that of each of the above-described example embodiments will be assigned the same reference numeral and overlapping explanation is omitted.

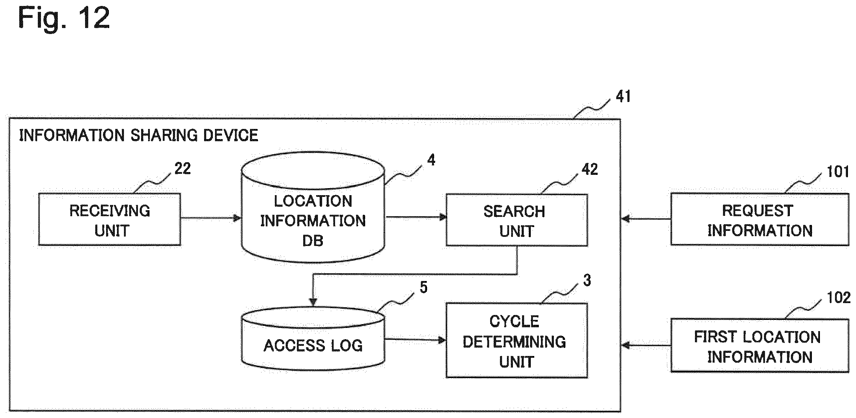

The information sharing device 41 according to the fourth example embodiment of the present invention is explained with reference to Fig. 12.

Fig. 12 is a block diagram illustrating a configuration of the information sharing device 41 according to the fourth example embodiment of the present invention.

In Fig. 12, the information sharing device 41 includes a search unit 42, the cycle determining unit 3, the location information database 4, the access log 5, and the receiving unit 22.

In each of the above-described example embodiments, the information sharing device was explained by way of an example configuration of registering location information transmitted from the terminal, as triggered by the timer event generated in that terminal (location information registration triggered by the terminal). However, the example embodiment according to the present invention is not limited to this configuration. The information sharing device 41 searches the location information DB 4, using the group ID included in the request information 101 as a condition. The information sharing device 41 may further adopt a configuration of including a search unit 42 which performs the following process, if, as a result of a search, the location-measured time associated with the terminal ID is not within its effective time and is expired. That is, the information sharing device 41 may adopt a configuration of including the search unit 42 that requests the terminal having the terminal ID to transmit the location information.

The following more specifically explains the operation of the information sharing device 41 according to the present example embodiment.

(Location information registration triggered by a sharing device)

For the purpose of explanation, the display unit 32 in a specific terminal is assumed to transmit request information 101 to the information sharing device 41, as an example.

To be more specific, the search unit 42 receives the request information 101 from the specific terminal. The search unit 42 refers to the location-measured time added to the search result, as a result of searching the location information DB 4 on the basis of the group ID included in the request information 101. If, as a result of the search, the location-measured time is older by a certain time than the "time stamp" indicating the date and time in which the location information is requested (if the location-measured time is not within the effective time and is expired), the search unit 42 executes the following process. The search unit 42 requests that the terminal having the terminal ID associated with the location-measured time to transmit the location information.

Accordingly, in response to the reception of such a request, the location information transmitting unit 33 of the terminal uses the location-measuring unit 34 to measure the current location. The location information transmitting unit 33 transmits the first location information 102 including the location information, to the information sharing device 41.

The search unit 42 transmits the response to the request information 101, to the specific terminal, when having collected the location information of all the terminals being the target of search that is within the effective time and is effective.

In this way, the information sharing device 41 according to the present example embodiment can achieve the effect explained in each example embodiment, and in addition, can provide more accurate location information.

The reason is that the information sharing device 41 includes the search unit 42 that, if the location information associated with the terminal being the target of search has passed the term of validity and is expired, controls to transmit new location information to the terminal.

<Fifth example embodiment>

Next, the following describes an example embodiment based on the above-described information sharing device 21 according to the third example embodiment of the present invention. The following explanation mainly explains the characteristic portion related to the present example embodiment. In the following, the same configuration as that of each of the above-described example embodiments will be assigned the same reference numeral and overlapping explanation is omitted.

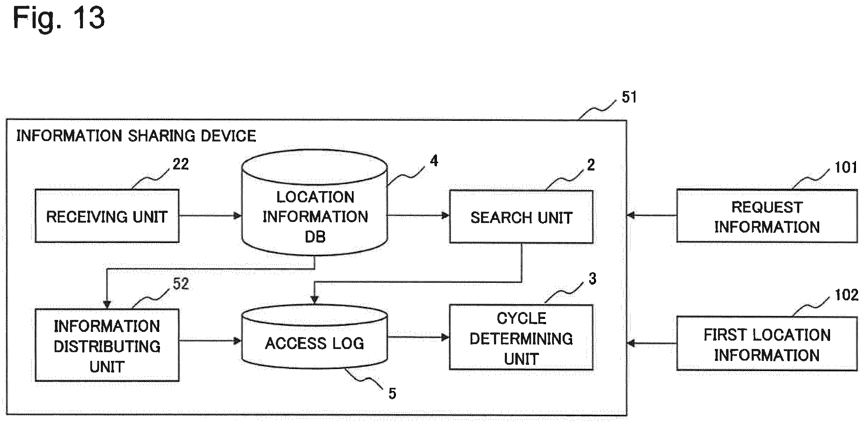

The information sharing device 51 according to the fifth example embodiment of the present invention is explained with reference to Fig. 13.

Fig. 13 is a block diagram illustrating a configuration of the information sharing device 51 according to the fifth example embodiment of the present invention.

In Fig. 13, the information sharing device 51 includes the search unit 2, the cycle determining unit 3, the location information database 4, the access log 5, the receiving unit 22, and an information distributing unit 52.

Each of the above-described example embodiments was explained by way of an example configuration of obtaining, from the information sharing device, the location information of terminals belonging to the group, as triggered by the timer event generated in the specific terminal (pull-type location information distribution). However, the example embodiment according to the present invention is not limited to this configuration. The information sharing device 51 may adopt a configuration of realizing push-type location information distribution.

The following more specifically explains the operation of the information sharing device 51 according to the present example embodiment.

(Push-type location information distribution)

When switched to either the displayed state (foreground state) or the non-displayed state (background state), the display unit 32 of the specific terminal notifies the information sharing device 51 to that effect.

The information distributing unit 52 stores the information of the displayed state or the non-displayed state for each terminal, in response to reception of this notification.

As triggered by a timer event generated at each time cycle, the information distributing unit 52 transmits, to each terminal, the location information of the other terminals constituting the group to which the terminal belongs.

To be more specific, the information distributing unit 52 may adopt such a configuration of, for example when the terminal being the target of distribution is in the foreground state, transmitting the location information of each terminal at each predetermined shorter time cycle. Alternatively, the information distributing unit 52 may adopt such a configuration of determining the time cycle by an arithmetic operation as illustrated in Fig. 5, and transmitting the location information of each terminal at the determined time cycle.

In this way, the information distributing unit 52 can store the information indicating either of the foreground state or the background state, for each terminal belonging to the same group. The information distributing unit 52 can transmit the location information of the terminal belonging to the same group, at the time cycle according to the state.

The information distributing unit 52 adds, to the access log as an access record, a set of the transmitted time and at least one of the group ID of the group and the terminal ID of the terminal being the transmission destination.

In this way, the information sharing device 51 according to the present example embodiment can achieve the effect explained in each example embodiment, and in addition, can provide more accurate location information, by a method of push-type distribution.

The reason is that is that the information sharing device 51 includes the information distributing unit 52 that can transmit the location information in accordance with the state of a terminal.

(Example of hardware configuration)

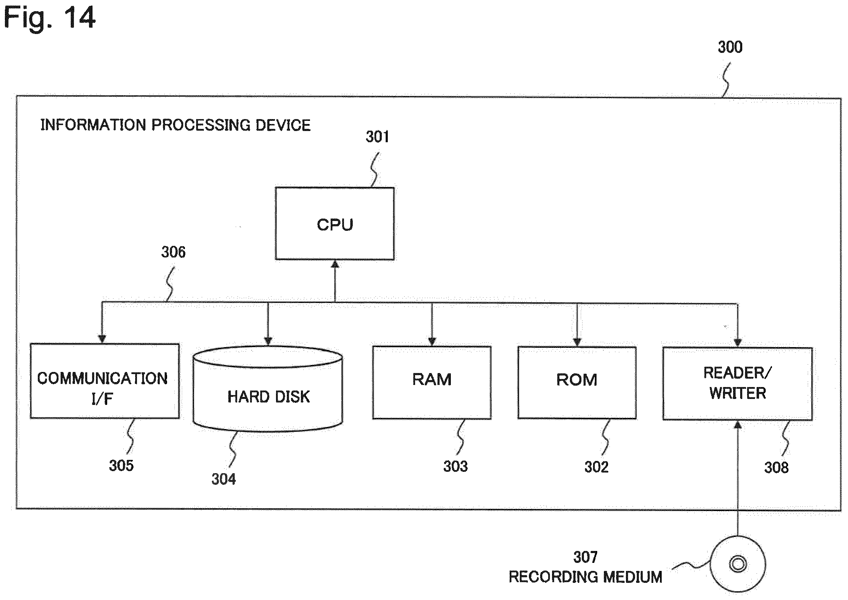

Each unit illustrated in the drawings according to the above-explained example embodiments can be considered as a functional (processing) unit (software module) of a software program. Each software module may be realized by dedicated hardware. However, the classification of each unit illustrated in these drawings is for the purpose of explanation; and in actual mounting, various configurations are possible. An example of the hardware environment in such a case is explained with reference to Fig. 14.

Fig. 14 is a diagram that illustratively explains a configuration of an information processing device 300 (computer) that can realize an information sharing device according to a model example embodiment of the present invention. That is, Fig. 14 illustrates a hardware environment that can realize each function in the above-described example embodiments, configured as a computer (information processing device) such as a server. This computer can realize the information sharing device being all or a part of the information sharing device 1 (Fig. 2), the information sharing device 21 (Fig. 7), the information sharing device 41 (Fig. 12), and the information sharing device 51 (Fig. 13).

The information processing device 300 illustrated in Fig. 14 is a typical computer in which the following configurations are connected via a bus (communication line) 306.

- CPU (Central Processing Unit) 301
- ROM (Read Only Memory) 302
- RAM (Random Access Memory) 303
- Hard Disk (storage device) 304
- Communication interface with external devices (communication I/F (interface) illustrated in Fig. 14) 305
- Reader/writer 308 that can read and write data stored in a recording medium 307 such as CD-ROM (Compact Disc Read Only Memory)

The present invention explained by way of the above example embodiments can be realized by the following procedure. A computer program that can realize the functions of the block configuration diagrams (Fig. 2, Fig. 7, Fig. 12, and Fig. 13) or the sequence diagrams and the flowcharts (Fig. 4, Fig. 5, Fig. 9, and Fig. 10) referred to in the explanation of the information processing device 300 illustrated in Fig. 14, is supplied to the information processing device 300. Thereafter, the computer program is read onto the CPU 301 of the hardware and executed and realized. The computer program supplied in the device may be stored in a non-volatile storage device such as a readable and writable temporary storage memory (RAM 303) or the hard disk 304.

In the cases described above, a currently common procedure can be adopted as the method of supplying a computer program to within the hardware. The possible methods include a method of installing the computer program into the device via various recording media 307 such as CD-ROM, and a method of downloading the computer program via a communication line such as the Internet from outside. Then in such cases, the present invention can be considered as being configured by a code configuring the computer program or a recording medium storing therein the code.

So far, the example embodiments have been used to explain the present invention. However, the present invention is not limited to the above-described example embodiment. The configuration and details of the present invention can be modified in various manners that can be conceived of by those skilled in the art within the scope of the present invention.

Part or all of each of the example embodiments described above can also be described as in the following Supplementary Notes. However, the present invention illustratively explained by way of the above-described example embodiments is not limited to the following.

(Supplementary Note 1)

An information sharing device, including:

search means for, in response to receiving, from a specific terminal, request information requesting location information of another terminal belonging to a same group as the specific terminal, referring to a location information database including the location information obtained at each first time cycle from the other terminal based on a group ID (where the ID is an identifier) that can identify the group included in the request information, and providing the specific terminal with the location information of the other terminal obtained from the location information database; and
cycle determining means for determining a second time cycle different from the first time cycle in accordance with a number of times the location information database is referred to, and providing the determined second time cycle to the specific terminal and the other terminal, wherein
the cycle determining means determining the second time cycle to be a time cycle shorter than the first time cycle, as the number of times of referring becomes greater in a predetermined period.

(Supplementary Note 2)

The information sharing device as set forth in Supplementary Note 1, wherein
the search means stores, in a log, the group ID in association with a time at which the reference was made, and
the cycle determining means obtains, from the log, a number of access records designating the group ID within the predetermined period, calculates an average reference interval based on the obtained number and the predetermined period, and determines the second time cycle using a function that increases the second time cycle in accordance with the average reference interval. (Supplementary Note 3)

The information sharing device as set forth in Supplementary Note 1, wherein

the search means stores, in the log, the group ID, the time at which the reference was made, and a terminal ID that can identify the terminal included in a result of the reference, in association with each other, and

the cycle determining means obtains, from the log, a number of access records designating a set of the group ID and the terminal ID in the predetermined period, calculates an average reference interval based on the obtained number and the predetermined period, and determines the second time cycle that is different for each of the specific terminal and another terminal, using a function that increases the second time cycle in accordance with the average reference interval.

(Supplementary Note 4)

The information sharing device as set forth in any one of Supplementary Notes 1 to 3, wherein

if, from among the location information obtained from the location information database, a distance between a current location of the specific terminal and a location indicated by the location information is greater than a predetermined distance, the search means provides the location information excluding the corresponding location information.

(Supplementary Note 5)

The information sharing device as set forth in any one of Supplementary Notes 1 to 4, wherein

if, as a result of referring to the location information database, a time at which the location information was measured has passed an effective time and is expired, the search means requests the location information from a terminal associated with the measured time.

(Supplementary Note 6)

The information sharing device as set forth in any one of Supplementary Notes 1 to 5, further comprising:

information distributing means for storing information indicating any state of a foreground state and a background state, for each of the specific terminal and another terminal, and providing the location information to the specific terminal and the other terminal at each time cycle in accordance with the state.

(Supplementary Note 7)

The information sharing device as set forth in any one of Supplementary Notes 1 to 6, wherein

if the second time cycle is within a specific range from the first time cycle, the cycle determining means does not provide the specific terminal or the other terminal with the second time cycle.

(Supplementary Note 8)

The information sharing device as set forth in any one of Supplementary Notes 1 to 7, wherein

the location information database includes:

the group ID that can identify the group,

a terminal ID that can identify the specific terminal and the other terminal being a terminal included in a result of searching the positon information database by the search means, which belong to the group,

the location information, and

information associated with a location-measured time at which the location information was measured.

(Supplementary Note 9)

The information sharing device as set forth in Supplementary Note 8, further comprising:

receiving means for storing, in the location information database, the group ID, the terminal ID, the location information, and the location-measured time, which are obtained from the specific terminal and the other terminal.

(Supplementary Note 10)

An information sharing system, comprising:

the information sharing device as set forth in any one of Supplementary Notes 1 to 9, and a specific terminal and one or more terminals different from the specific terminal belonging to a same group connected to be communicable to the information sharing device via a communication network, wherein
each of all terminals belonging to the same group measures a location of the terminal itself and provides the information sharing device with a result of the measurement, in accordance with the second time cycle obtained from the information sharing device, and
the specific terminal presents location information of the one or more terminals obtained from the information sharing device.

(Supplementary Note 11)

An information sharing method comprising, by means of an information processing device:

in response to receiving, from a specific terminal, request information requesting location information of another terminal belonging to a same group as the specific terminal, referring to a location information database including the location information obtained at each first time cycle from the other terminal based on a group ID (where the ID is an identifier) that can identify the group included in the request information, and providing the specific terminal with the location information of the other terminal obtained from the location information database,
determining a second time cycle different from the first time cycle in accordance with a number of times the location information database is referred to, and providing the determined second time cycle to the specific terminal and the other terminal; and
in determining the second time cycle, determining the second time cycle to be a time cycle shorter than the first time cycle, as the number of times of referring becomes greater in a predetermined period.

(Supplementary Note 12)

A recording medium storing therein a computer program making a computer implement:

a function of, in response to receiving, from a specific terminal, request information requesting location information of another terminal belonging to a same group as the specific terminal, referring to a location information database including the location information obtained at each first time cycle from the other terminal based on a group ID (where the ID is an identifier) that can identify the group included in the request information, and providing the specific terminal with the location information of the other terminal obtained from the location information database,
a function of determining a second time cycle different from the first time cycle in accordance with a number of times the location information database is referred to, and providing the determined second time cycle to the specific terminal and the other terminal; and
a function of, in determining the second time cycle, determining the second time cycle to be a time cycle shorter than the first time cycle, as the number of times of referring becomes greater in a predetermined period.

[Industrial Applicability]

The present invention is not limited to each of the example embodiments described above. The present invention is applicable to various types of terminals realizing the location information sharing system targeted to a mobile terminal such as a smartphone or a vehicle-mounted information terminal.
This application claims priority of Japanese Patent Application No. 2014-140437 filed on July 8, 2014, all the disclosure of which is incorporated herein by reference.

[Reference signs List]

| | |
|---|---|
| 1 | information sharing device |
| 2 | search unit |
| 3 | cycle determining unit |

| 4 | location information DB |
| 5 | access log |
| 10 | information sharing system |
| 11-1, 11-n | mobile terminal |
| 21 | information sharing device |
| 22 | receiving unit |
| 30 | information sharing system |
| 31 | cycle changing unit |
| 32 | display unit |
| 33 | location information transmitting unit |
| 34 | location-measuring unit |
| 41 | information sharing device |
| 42 | search unit |
| 51 | information sharing device |
| 52 | information distributing unit |
| 101 | request information |
| 102 | first location information |
| 110 | communication network |
| 300 | information processing device |
| 301 | CPU |
| 302 | ROM |
| 303 | RAM |
| 304 | hard disk |
| 305 | communication interface |
| 306 | bus |
| 307 | recording medium |
| 308 | reader/writer |

**Claims**

1.  An information sharing device, comprising:

    search means for, in response to receiving, from a specific terminal, request information requesting location information of another terminal belonging to a same group as the specific terminal, referring to a location information database including the location information obtained at each first time cycle from the other terminal based on a group ID (where the ID is an identifier) that can identify the group included in the request information, and providing the specific terminal with the location information of the other terminal obtained from the location information database; and
    cycle determining means for determining a second time cycle different from the first time cycle in accordance with a number of times the location information database is referred to, and providing the determined second time cycle to the specific terminal and the other terminal,
    the cycle determining means determining the second time cycle to be a time cycle shorter than the first time cycle, as the number of times of referring becomes greater in a predetermined period.

2.  The information sharing device as set forth in Claim 1, wherein
    the search means stores, in a log, the group ID in association with a time at which the reference was made, and
    the cycle determining means obtains, from the log, a number of access records designating the group ID within the predetermined period, calculates an average reference interval based on the obtained number and the predetermined period, and determines the second time cycle using a function that increases the second time cycle in accordance with the average reference interval.

3.  The information sharing device as set forth in Claim 1, wherein
    the search means stores, in the log, the group ID, the time at which the reference was made, and a terminal ID that can identify the terminal included in a result of the reference, in association with each other, and
    the cycle determining means obtains, from the log, a number of access records designating a set of the group ID and the terminal ID in the predetermined period, calculates an average reference interval based on the obtained number and the predetermined period, and determines the second time cycle that is different for each of the specific terminal and another terminal, using a function that increases the second time cycle in accordance with the average reference interval.

4. The information sharing device as set forth in any one of Claims 1 to 3, wherein
if, from among the location information obtained from the location information database, a distance between a current location of the specific terminal and a location indicated by the location information is greater than a predetermined distance, the search means provides the location information excluding the corresponding location information.

5. The information sharing device as set forth in any one of Claims 1 to 4, wherein
if, as a result of referring to the location information database, a time at which the location information was measured has passed an effective time and is expired, the search means requests the location information from a terminal associated with the measured time.

6. The information sharing device as set forth in any one of Claims 1 to 5, further comprising:

   information distributing means for storing information indicating any state of a foreground state and a background state, for each of the specific terminal and another terminal, and providing the location information to the specific terminal and the other terminal at each time cycle in accordance with the state.

7. The information sharing device as set forth in any one of Claims 1 to 6, wherein
if the second time cycle is within a specific range from the first time cycle, the cycle determining means does not provide the specific terminal or the other terminal with the second time cycle.

8. An information sharing system, comprising:

   the information sharing device as set forth in any one of Claims 1 to 7, and a specific terminal and one or more terminals different from the specific terminal belonging to a same group connected to be communicable to the information sharing device via a communication network, wherein
   each of all terminals belonging to the same group measures a location of the terminal itself and provides the information sharing device with a result of the measurement, in accordance with the second time cycle obtained from the information sharing device, and
   the specific terminal presents location information of the one or more terminals obtained from the information sharing device.

9. An information sharing method comprising:

   in response to receiving, from a specific terminal, request information requesting location information of another terminal belonging to a same group as the specific terminal, referring to a location information database including the location information obtained at each first time cycle from the other terminal based on a group ID (where the ID is an identifier) that can identify the group included in the request information, and providing the specific terminal with the location information of the other terminal obtained from the location information database; and determining a second time cycle different from the first time cycle in accordance with a number of times the location information database is referred to, and providing the determined second time cycle to the specific terminal and the other terminal,
   in determining the second time cycle, the second time cycle being determined to be a time cycle shorter than the first time cycle, as the number of times of referring becomes greater in a predetermined period.

10. A recording medium storing therein a computer program making a computer implement:

   a function of, in response to receiving, from a specific terminal, request information requesting location information of another terminal belonging to a same group as the specific terminal, referring to a location information database including the location information obtained at each first time cycle from the other terminal based on a group ID (where the ID is an identifier) that can identify the group included in the request information, and providing the specific terminal with the location information of the other terminal obtained from the location information database,
   a function of determining a second time cycle different from the first time cycle in accordance with a number of times the location information database is referred to, and providing the determined second time cycle to the specific terminal and the other terminal; and

a function of, in determining the second time cycle, determining the second time cycle to be a time cycle shorter than the first time cycle, as the number of times of referring becomes greater in a predetermined period.

Fig. 1

EP 3 168 749 A1

# Fig. 2

INFORMATION SHARING DEVICE

LOCATION INFORMATION DB

SEARCH UNIT

ACCESS LOG

CYCLE DETERMINING UNIT

REQUEST INFORMATION

# Fig. 3

| GROUP ID | TERMINAL ID | LOCATION INFORMATION | LOCATION-MEASURED TIME |
|----------|-------------|----------------------|------------------------|
| 1 | 34 | (35.70,139.93) | 2014/10/13  12:45:30 |
| 1 | 50 | (35.72,139.91) | 2014/10/13  12:45:10 |
| 1 | 61 | (35.66,139.04) | 2014/10/13  12:45:10 |
| 1 | 75 | (35.79,139.94) | 2014/10/13  12:45:20 |
| 2 | 19 | (39.01,141.62) | 2014/10/13  12:45:20 |
| 2 | 43 | (39.04,141.66) | 2014/10/13  12:45:00 |
| 2 | 85 | (38.96,141.67) | 2014/10/31  12:45:20 |

EP 3 168 749 A1

# Fig. 4

POSITON INFORMATION SHARING DEVICE 1

MOBILE TERMINAL 11

CYCLE DETERMINING UNIT 3

ACCESS LOG 5

TIMER EVENT
(STEP S1)

SEARCH ACCESS LOG
(STEP S2)

DETERMINE
TRANSMISSION CYCLE
(STEP S2)

TRANSMIT CYCLE
UPDATE NOTIFICATION
(STEP S3)

UPDATE VALUE OF
TRANSMISSION CYCLE
(STEP S4)

TIME (t)

**Fig. 5**

START

FOR EACH GROUP ID

CALCULATE AVERAGE REFERENCE INTERVAL T — S11

$T \geqq T_{max}$? — S12

TRUE → SET VALUE OF $T_{max}$ TO BE TRANSMISSION CYCLE — S15

FALSE

$T \leqq T_{min}$? — S13

TRUE → SET VALUE OF $T_{min}$ TO BE TRANSMISSION CYCLE — S16

FALSE

SET f(T) TO BE TRANSMISSION CYCLE — S14

LOOP

END

# Fig. 6

GROUP ID＝1                    (EXPLANATORY NOTE) ＊:ACCESS RECORD

＊    ＊    ｜ ＊    ＊ ＊    ＊ ＊    ＊    ＊    ＊  ｜

→ TIME

◄─────── REFERENCE TIME = FIVE MINUTES ───────►

FIVE MINUTES BEFORE                    MOST RECENT TIME

EP 3 168 749 A1

# Fig. 7

INFORMATION SHARING DEVICE ~21

RECEIVING UNIT ~22

LOCATION INFORMATION DB ~4

SEARCH UNIT ~2

REQUEST INFORMATION ~101

ACCESS LOG ~5

CYCLE DETERMINING UNIT ~3

FIRST LOCATION INFORMATION ~102

EP 3 168 749 A1

## Fig. 8

EP 3 168 749 A1

# Fig. 9

MOBILE ERMINAL
11-1

INFORMATION SHARING
DEVICE 21

LOCATION INFORMATION TRANSMITTING UNIT — 33

RECEIVING UNIT — 22

LOCATION INFORMATION DB — 4

TIMER EVENT (STEP S21)

TRANSMIT LOCATION INFORMATION (STEP S22)

STORE LOCATION INFORMATION (STEP S23)

TIME (t)

# Fig. 10

MOBILE TERMINAL 11-1

INFORMATION SHARING DEVICE 21

DISPLAY UNIT — 32

SEARCH UNIT — 2

LOCATION INFORMATION DB — 4

ACCESS LOG — 5

TIMER EVENT (STEP S31)

TRANSMIT REQUEST INFORMATION (STEP S32)

SEARCH FOR LOCATION INFORMATION (STEP S33)

ADD ACCESS RECORD (STEP S34)

TRANSMIT SEARCH RESULT (STEP S35)

DISPLAY RESULT (STEP S36)

TIME (t)

EP 3 168 749 A1

# Fig. 11

EP 3 168 749 A1

## Fig. 12

INFORMATION SHARING DEVICE 41

RECEIVING UNIT 22

LOCATION INFORMATION DB 4

SEARCH UNIT 42

REQUEST INFORMATION 101

ACCESS LOG 5

CYCLE DETERMINING UNIT 3

FIRST LOCATION INFORMATION 102

# Fig. 13

INFORMATION SHARING DEVICE  51

RECEIVING UNIT  22

LOCATION INFORMATION DB  4

SEARCH UNIT  2

REQUEST INFORMATION  101

INFORMATION DISTRIBUTING UNIT  52

ACCESS LOG  5

CYCLE DETERMINING UNIT  3

FIRST LOCATION INFORMATION  102

EP 3 168 749 A1

Fig. 14

300

INFORMATION PROCESSING DEVICE

301

CPU

306

COMMUNICATION I/F

HARD DISK

RAM

ROM

READER/ WRITER

305

304

303

302

308

307
RECORDING MEDIUM

## INTERNATIONAL SEARCH REPORT

| | International application No. |
|---|---|
| | PCT/JP2015/003381 |

**A. CLASSIFICATION OF SUBJECT MATTER**
*G06F13/00*(2006.01)i, *H04M3/487*(2006.01)i, *H04M11/00*(2006.01)i

According to International Patent Classification (IPC) or to both national classification and IPC

**B. FIELDS SEARCHED**

Minimum documentation searched (classification system followed by classification symbols)
G06F13/00, H04M3/487, H04M11/00

Documentation searched other than minimum documentation to the extent that such documents are included in the fields searched
Jitsuyo Shinan Koho       1922–1996   Jitsuyo Shinan Toroku Koho   1996–2015
Kokai Jitsuyo Shinan Koho  1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-137949 A  (Navitime Japan Co., Ltd.),<br>14 July 2011 (14.07.2011),<br>paragraphs [0063], [0065] to [0077]<br>(Family: none) | 1-10 |
| A | JP 2012-18483 A  (NEC Corp.),<br>26 January 2012 (26.01.2012),<br>paragraphs [0005], [0014]<br>(Family: none) | 1-10 |
| A | JP 2013-66158 A  (NTT Communications Corp.),<br>11 April 2013 (11.04.2013),<br>paragraphs [0112] to [0118]; fig. 18<br>(Family: none) | 1-10 |

☐ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05 August 2015 (05.08.15) | 18 August 2015 (18.08.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007083628 A
- JP 2012142794 A
- JP 2014140437 A